# EUROPÄISCHE PATENTSCHRIFT

(11) **EP 0 345 518 B1**
(45) Veröffentlichungstag und Bekanntmachung des Hinweises auf die Patenterteilung: **06.10.1993**
(21) Anmeldenummer: 89109149.8
(22) Anmeldetag: 20.05.1989
(51) Int. Cl.: B32B 17/10, C03C 27/12, B60J 1/02, B29C 73/00

(54) **Kunststoffsaugnapf**
Plastic suction cup
Ventouse en matière plastique

(30) Priorität: 09.06.1988 DE 3819622
(43) Veröffentlichungstag der Anmeldung: 13.12.1989
(73) Patentinhaber: DAIMLER-BENZ AKTIENGESELLSCHAFT, 70327 Stuttgart (DE)
(72) Erfinder: Lay, Kurt, D-7407 Rottenburg 3 (DE); Sailer, Erwin, D-7031 Alfdorf (DE)

(56) Entgegenhaltungen:
- DE-C- 3 607 738
- US-A- 4 047 863
- US-A- 4 165 397

## Beschreibung

Die Erfindung betrifft einen Kunststoffsaugnapf nach dem Oberbegriff des Anspruches 1.

Nach dem bisherigen Stand der Technik, siehe DE-C- 36 07 738, werden z.B. kleinere Steinschlagschäden an Mehrschichten-Sicherheitsgläsern dadurch repariert, daß mittels eines Saugnapfes ein leichter Unterdruck über der zu reparierenden Stelle erzeugt wird, und danach mit einer Einwegspritze die bezüglich der Wandstärke homogene Außenhaut des Saugnapfes durchstochen wird, um das Reparaturharz einzubringen. Hierbei ist jedoch immer wieder zu bemerken, daß zum einen das Durchstechen der Außenhaut mit der Nadel recht schwierig ist, da der Saugnapf bei zu hohem Unterdruck zu flach anliegt, und zum anderen läuft das Reparaturharz immer wieder zum unteren Teil des Kunststoffsaugnapfes.

Die Aufgabe der Erfindung besteht darin, eine leichte Einbringung für die Hohlnadel der Einwegspritze zu ermöglichen, und das eingebrachte Harz gezielt an der Schadensstelle zu halten, d. h., ein Verlaufen des Reparaturharzes weitgehendst zu verhindern.

Die Aufgabe wird erfindungsgemäß durch die kennzeichnenden Merkmale des Anspruches 1 gelöst.

Der Vorteil der Erfindung ist der, daß der beim Benutzen des Saugers dieser wegen der distanzsichernden Auffangtasche nicht mehr zu flach an die Scheibe gepreßt werden kann, und somit die Hohlnadel der Injektionsspritze, die das Reparaturharz enthält, gezielt und sicher die Auffangtasche erreicht. Diese besitzt ferner den Vorteil, daß sie zum einen, bedingt durch die Transparenz des verwandten Werkstoffes, gezielt auf die Schadensstelle angesetzt werden kann und dabei die Begrenzung festlegt. Zum anderen dient sie als Reservoire für das Reparaturmedium, und das Harz kann so nicht mehr in den tiefer liegenden Teil am Rand des Kunststoffsaugnapfes fließen.

Ein Ausführungsbeispiel ist in den Zeichnungen dargestellt und wird im folgenden erläutert. Es zeigen
- Figur 1: einen Saugnapf mit fester Handhabe und
- Figur 2: eine Aufsicht zu Figur 1.

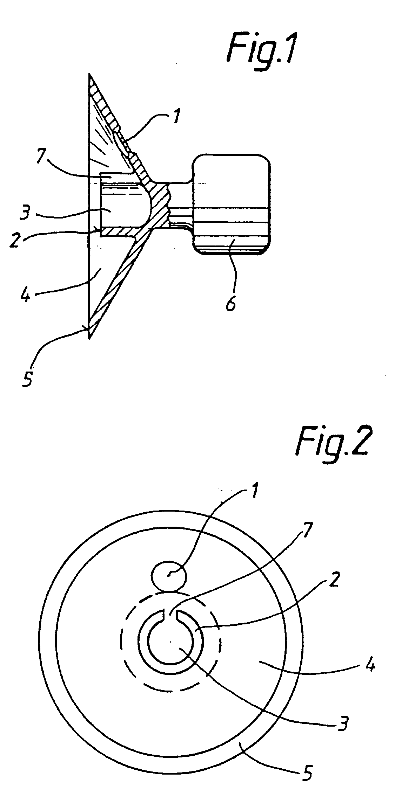

In Figur 1 ist der Querschnitt durch einen möglichen Kunststoffsaugnapf dargestellt. Dabei ist die Dünnstelle 1 in der Wandung 5 des Kunststoffsaugnapfes deutlich zu sehen. Ferner ist die im Kunststoffsaugnapf innen liegende Auffangtasche 2, deren Ränder gegenüber denen des Kunststoffsaugnapfes zurückversetzt sind, ersichtlich. Die Auffangtasche 2 besitzt einen axialen Schlitz 7, der der Dünnstelle 1 gegenüberliegt. Ferner ist in diesem Ausführungsbeispiel ein Handhabungsstück 6 an der Wandung 5 des Kunststoffsaugnapfes angebracht, wobei in dem vorliegenden Fall das Handhabungsstück 6 und der Kunststoffsaugnapf ein Teil sind. Es besteht ferner die Möglichkeit das Handhabungsstück 6 als mit dem Innenvolumen des Kunststoffsaugnapfes in Verbindung stehenden Saugball, bzw. als ein Anschluß für eine Vakuumquelle auszubilden.

Der funktionelle Zusammenhang ist wie folgt:
Der Kunststoffsaugnapf wird auf die Schadensstelle einer Glasscheibe angedrückt und die Wandung 5 gibt aufgrund ihrer Elastizität nach. Die überschüssige Luft wird aus dem Innenraum 4 herausgepreßt, bis die Ränder der Auffangtasche 2 aufliegen und teilweise zusammengepreßt sind. Am Handhabungsstück 6 wird so stark gezogen, daß im Innenraum 4 ein Unterdruck entsteht, wobei die Ränder der Auffangtasche 2 immer noch auf der Scheibe aufliegen. Mit der Hohlnadel einer Injektionsspritze wird die Dünnstelle 1 des Mantels 5 des Kunststoffsaugnapfes durchstochen und die Spitze der Hohlnadel in die nach oben gerichtete axiale Öffnung 7 der Auffangtasche 2 gesteckt. Nun wird das Reparaturharz in das Reservoire 3 gefüllt. Dabei fließt es in die Schadensstelle ein. Beim Entfernen des Kunststoffsaugnapfes von der Glasscheibe lastet auf dem Fleck des Reparaturharzes der atmosphärische Druck. Dadurch wird das Reparaturharz in die bei Unterdruck gefüllte Schadensstelle eingepreßt. Der ausgehärtete Kunstharzüberstand kann mittels eines Messers abgeschabt werden.

## Patentansprüche

1. Kunststoffsaugnapf aus flexiblem, transparentem Werkstoff, der dichtend auf eine Glasscheibe aufsetzbar und mit einer Hohlnadel vakuumdicht durchstechbar ist,
**dadurch gekennzeichnet,**
daß die Wandung (5) des Kunststoffsaugnapfes eine gegenüber der sonstigen Wandstärke dünnere Stelle - Dünnstelle (1) - zum Durchstechen der Hohlnadel aufweist, und daß im Inneren des Kunststoffsaugnapfes eine mit der Hohlnadel erreichbare Auffangtasche (2) angebracht ist, die in die gleiche Richtung wie der Saugnapf selbst offen ist, und deren vordere Kante gegenüber der Anlagekante des Kunststoffsaugnapfes zurückversetzt ist und die an ihrem Umfang eine zur Dünnstelle (1) hin weisende Öffnung (7)zum Durchlaß für die Hohlnadel aufweist.

2. Kunststoffsaugnapf nach Anspruch 1,
**dadurch gekennzeichnet**,
daß die Auffangtasche (2) in Form eines axial geschlitzten Zylinders ausgebildet ist, wobei der Schlitz (7) in Gegenüberstellung zur Dünnstelle (1) in der Wandung (5) des Kunststoffsaugnapfes angeordnet ist.

3. Kunststoffsaugnapf nach einem der Ansprüche 1 bis 2,
**dadurch gekennzeichnet,**
daß eine am Kunststoffsaugnapf angebrachte Handhabe (6) als ein mit dem Saugnapfinnern verbundener Saugball ausgebildet ist.

## Claims

1. Plastic suction cup of flexible transparent material, which can be applied sealingly onto a glass pane and which can be pierced vacuum-tight with a hollow needle, characterized in that the wall (5) of the plastic suction cup has an area - thin area (1) - thinner relative to the remaining thickness of the wall, for piercing through with the hollow needle, and in that, in the inner part of the plastic suction cup, a collector pouch (2) is provided which can be reached with the hollow needle, is open in the same direction as the suction cup itself, and the front side of which is offset back relative to the application side of the plastic suction cup, and which has on its periphery an opening (7) facing the thin area (1) as a passage for the hollow needle.

2. Plastic suction cup according to claim 1, characterized in that the collector pouch (2) is designed in the form of an axially slit cylinder, the slit (7) being situated opposite the thin area (1) in the wall (5) of the plastic suction cup.

3. Plastic suction cup according to either claim 1 or claim 2, characterized in that a handle (6) mounted on the plastic suction cup is designed as a suction ball communicating with the inside of the suction cup.

## Revendications

1. Ventouse de plastique, en matériau flexible et transparent, pouvant se placer de façon étanche sur une vitre et être percée par une aiguille creuse, avec étanchéité au vide,
ventouse caractérisée par le fait que la paroi (5) de la ventouse de plastique présente un endroit - endroit mince (1) - assez mince par rapport à l'épaisseur du reste de la paroi pour permettre son percement par une aiguille creuse, et par le fait qu'à l'intérieur de la ventouse de plastique soit prévue une poche de capture (2) que l'aiguille creuse peut atteindre, qui est elle-même ouverte dans le même sens que la ventouse, dont le bord avant est décalé en arrière par rapport au bord d'appui de la ventouse de plastique et qui, à sa périphérie, présente, pour le passage de l'aiguille creuse, une ouverture (7) orientée en direction de l'endroit mince (1).

2. Ventouse de plastique selon la revendication 1,
caractérisée
par le fait que la poche de capture (2) a la forme d'un cylindre fendu axialement, la fente (7) étant disposée en face de l'endroit mince (1) prévu dans la paroi (5) de la ventouse de plastique.

3. Ventouse de plastique selon l'une des revendications 1 à 2,
caractérisée
par le fait qu'une poignée (6), rapportée sur la ventouse de plastique, est conçue en tant que poire de pose, reliée avec l'intérieur de la ventouse.
